# EUROPEAN PATENT SPECIFICATION

(11) **EP 2 893 811 B1**
(45) Date of publication and mention of the grant of the patent: **22.08.2018**
(21) Application number: 13834604.4
(22) Date of filing: 01.03.2013
(51) Int. Cl.: A23B 4/28, B08B 9/00, B05B 15/55

(54) **METHOD AND MACHINE FOR CLEANING NEEDLES FOR INJECTING FLUIDS INTO MEAT PRODUCTS**
VERFAHREN UND MASCHINE ZUR REINIGUNG VON NADELN ZUM EINSPRITZEN VON FLUIDEN IN FLEISCHPRODUKTE
PROCÉDÉ ET MACHINE DE NETTOYAGE D'AIGUILLES POUR INJECTER DES FLUIDES DANS DES PRODUITS CARNÉS

(30) Priority: 05.09.2012 ES 201230464
(43) Date of publication of application: 15.07.2015
(73) Proprietor: Metalquimia S.A., 17007 Girona Gerona (ES)
(72) Inventor: LAGARES COROMINAS, Narcís, E-17850 Besalú (Girona) (ES)
(74) Representative: Juncosa Miró, Jaime
(86) International application number: PCT/ES2013/000056
(87) International publication number: WO 2014/037590

(56) References cited:
- DE-A1-102007 021 352
- ES-T3- 2 281 040
- US-A1- 2003 168 082
- US-A1- 2005 000 550

## Description

### Technical field

The present invention relates to a method and a machine for cleaning needles for injecting fluids, especially brine, into meat products such as pork or similar, and optionally into fish products.

### State of the prior art

There are meat products that to be preserved have to be conveniently prepared, by introducing inside them suitable fluid ingredients, basically brine. The introduction of such fluids is preferably carried out mechanically for productivity reasons.

Document WO 2008/135610 relates to a machine for injecting treatment fluids, especially brine, into meat products, which comprises one or more injection heads, each one of them integrating a plurality of hollow, parallel and retractable needles. This injection head is arranged and actuated so as to move upwards/downwards along a double vertical length, with respect to a supporting plane in a conveyor that conveys the meat pieces. Each needle has an inner longitudinal passage, an inlet opening in communication with said inner passage located in an upper portion of the needle and a plurality of outlet ports in communication with said inner passage located in a lower portion of the needle. The inlet opening of each needle is arranged in an injection chamber of pressurized fluid connected to means for feeding said fluid.

Said injection needles must periodically be cleaned for future reuse thereof, an operation that is usually carried out by detaching the needles from the injection head and leaving them soaking in a cleaning solution for a predetermined time period, which is usually relatively long, for example approximately 24 hours. This operation ends up being time-consuming and unproductive.

Document US 2005000550 A1 describes a method for backflushing injector needles which comprises exposing the plurality of injector needles to a cleaning solution, removing the plurality of injector needles from the cleaning solution, and exposing simultaneously the hollow interior shaft of each injector needle to a gaseous stream which removes any moisture and fine particles that remain in the plurality of injector needles after the injector needles are cleaned. The gaseous stream is directed into the injector needle through the tip and exits the needle through the head, thereby simultaneously backflushing the injector needles.

### Disclosure of the invention

The present invention proposes a method and a machine for cleaning needles for injecting fluids into meat products, of the needle variety provided with an inner longitudinal passage and a series of outlet ports in their lower portion and an inlet opening in their upper portion, in communication with said inner passage.

The method of the present invention comprises the insertion of one or more needles in one support base such that said outlet ports are inside an airtight vessel by way of a container and said upper inlet opening is inside an upper chamber, and thereafter carrying out the following steps:
a) feeding a pressurized cleaning solution, such as caustic soda, into said container so as to force said cleaning solution to penetrate through the outlet ports, pass through the inner duct and then exit through the upper inlet opening of said needle or of each needle, and from there pass to a tank for its eventual recovery, so that the cleaning solution cleans the inner duct and the holes of the needles;
b) feeding a pressurized gas, such as air, into said container so as to force said gas to penetrate through the outlet ports, pass through the inner duct and then exit through the upper inlet opening of said needle or of each needle, and from there outwards, in order to eject any cleaning solution that might remain inside the needles;
c) feeding a pressurized washing liquid, such as water, into said container so as to force said cleaning solution to penetrate through the outlet ports, pass through the inner duct and then exit through the upper inlet opening of said needle or of each needle, and from there outwards, so that the washing liquid washes the inner duct and the holes of the needles; and
d) feeding again a pressurized gas, such as air, into said container so as to force said gas to penetrate through the outlet ports, pass through the inner duct and then exit through the upper inlet opening of said needle or of each needle, and from there outwards, in order to eject any washing liquid that might remain inside the needles;

Should there be several containers, at least step a) shall be carried out sequentially in each one of the containers, that is to say, one container after the other. Optionally, steps b) and c) may also be carried out sequentially in one container after the other. If necessary, step a) will be carried out one or more times as need may be, for each needle container.

The machine of the present invention comprises one or more containers, each one of them closed at the top by a support base designed to hold at least one group of needles in a position in which said upper portion of the needles, where said inlet opening is located, remains outside said container and said lower portion of the needles, where said outlet ports are located, remains inside the container; drive means of the cleaning solution in communication with a tank of cleaning solution through an intake duct and with said container through a drive duct; an air supply duct, which communicates an air-supply source with the container; a washing-liquid supply duct, which communicates a source of washing liquid supply with the container; and means for opening and closing a fluid passage, interposed in said ducts.

Preferably, and especially when there is a plurality of containers, the drive duct, the air supply duct, and the washing-liquid supply duct are in communication with a collector, which is in turn in communication with each one of the containers via a number of respective ducts, provided with means for opening and closing a fluid passage, interposed therein.

Each support base comprises a plurality of holes suitable for the insertion of respective needles, and each one of said holes is provided with a sealing gasket. In addition, the container is fastened to the support base by sealing means, such that the only way out for the fluids injected under pressure into the container is along the inner passage of the needles that are being washed.

The machine may comprise, for example, a body in which it is possible to distinguish an upper compartment, a lower compartment and a side compartment, which includes said tank with the cleaning solution. A tray that constitutes a bottom of the upper compartment separates the upper and lower compartments. This tray collects the fluids that come out of the needles and is connected to a drain pipe. In addition, the tray supports the aforementioned support bases in a position in which the upper portion of the needles, where the inlet opening is located, is inside the upper compartment and said container is in the lower compartment. The drive means, said collector, said drive duct, said air supply duct, and said washing-liquid supply duct are housed in the lower compartment.

The upper compartment is provided with two covers: one outer cover for closing thereof, and an inner cover, which can be adjusted in height, designed to abut against the upper end of the needles supported on the support bases. The weight of this inner cover prevents the needles from sliding upwards due to the pressure of the liquids injected into the containers.

### Brief description of the drawings

With the aim of facilitating understanding of the invention being proposed, by way of non-limiting example a set of sheets with drawings are attached hereto, in which:
figure 1 is a perspective view of a machine for cleaning needles used to inject fluids into meat products according to an embodiment of the present invention, when closed;
figure 2 is a perspective view of the machine shown in Fig. 1 with an outer and an inner cover, open so as to partially show the inside thereof; and
figure 3 is a schematic representation of the main components of the machine and their connections.

### Detailed description of a preferred embodiment of the invention

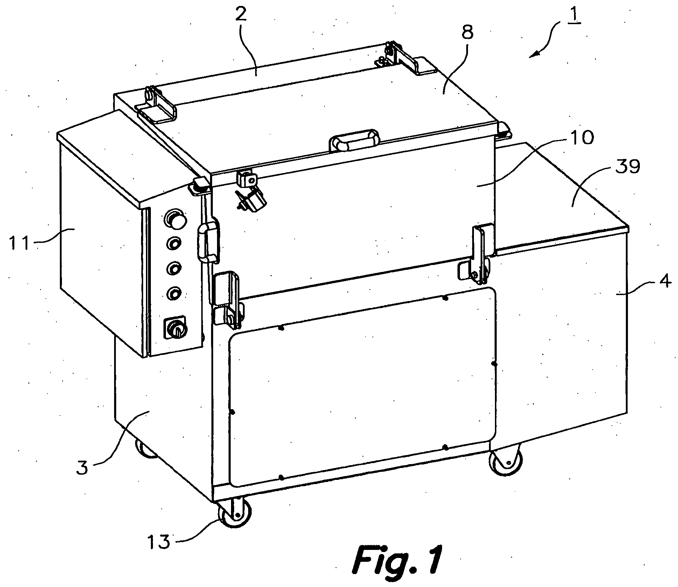

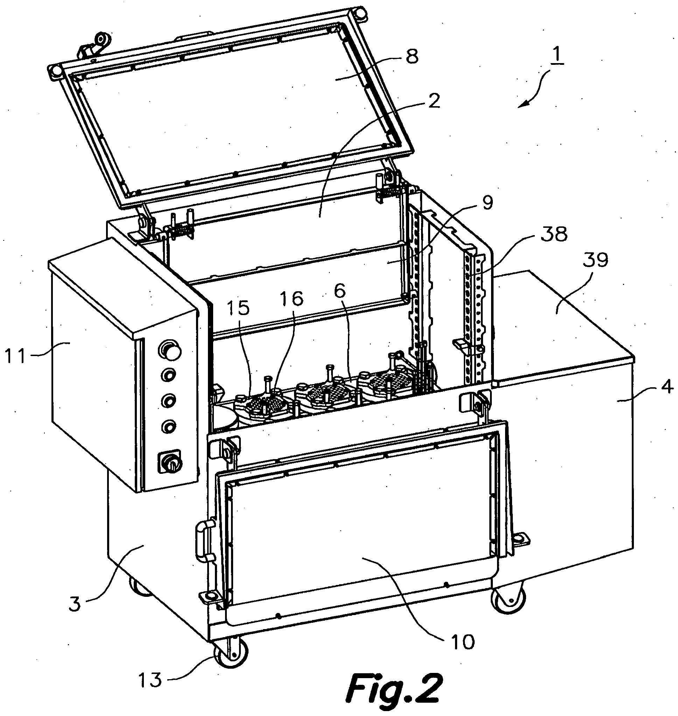

Firstly, in reference to Figs. 1 and 2, the machine 1, according to an embodiment of the present invention, comprises a main body in which it is possible to distinguish: an upper compartment 2, a lower compartment 3 and a side compartment 4. The upper 2 and lower 3 compartments are separated by a tray 6 formed by a horizontal intermediate partition wall that constitutes the bottom of the upper compartment 2. The upper compartment 2 has a double cover: one upper outer cover 8 that provides access therein and one inner cover 9 the function of which is explained below.

In the embodiment shown in Figs. 1 and 2, the upper compartment 2 has in addition a hinged front wall 10 that can be opened towards the front, which further facilitates access inside the upper compartment 2. In an alternative embodiment (not shown), instead of the hinged front wall, at least one portion of the front wall of the compartment 2 forms an integral part of the outer cover 8 and moves upwards together with the same when the outer cover 8 is opened to provide easy access to the upper compartment 2.

The lower compartment 3 houses various members, which will be listed below, necessary for the cleaning treatment of the needles, a cabinet 11 for the electrical control panel completes the machine, as well as lower wheels 13. The side compartment constitutes a tank 4.

The tray 6 forming the bottom of said upper compartment 2 of the machine body comprises one or more support bases 15 where needles (which are not represented in Figs. 1 and 2) are inserted and supported. Each support base 15 is provided with a plurality of holes 16, each hole 16 with a sealing gasket (non-visible). On one side of said tray 6 there is a drain connected to a drain pipe 36, which communicates with the tank 4 located in the side compartment.

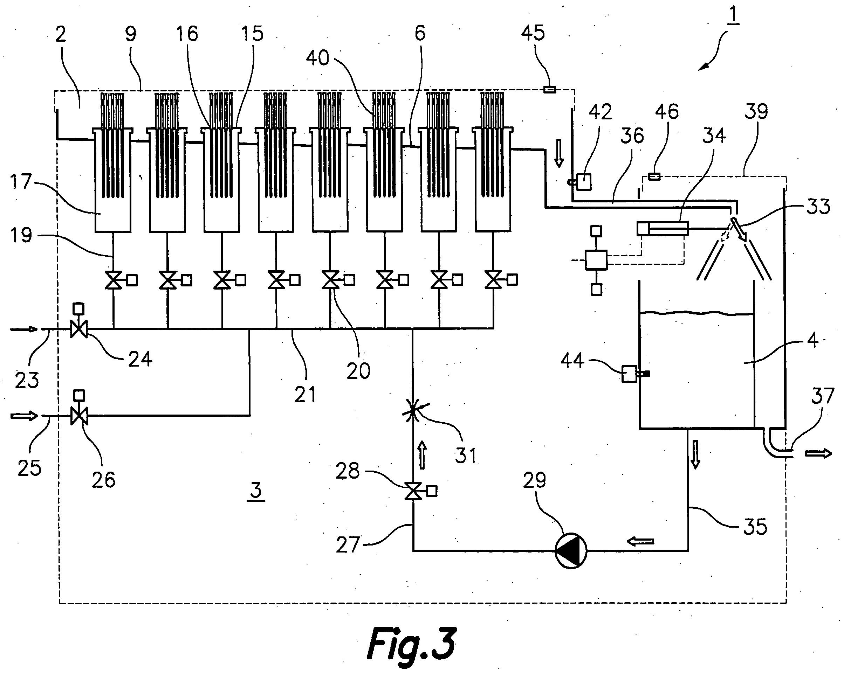

Now, with reference to Fig. 3, the lower compartment 3 contains a series of containers 17, each one of which is hermetically sealed at the top by one of said support bases 15. In the case illustrated, there is a plurality of containers 17 and these are connected in their lower portion to respective ducts 19, which in turn are connected in parallel to a collector 21, which in turn has a first connection with an air supply duct 23 that communicates with a source of pressurized air supply, a second connection with a washing-liquid supply duct 25, which communicates with a source of pressurized washing-liquid supply, and a third connection with a drive duct 27, which communicates with the drive outlet of a motor pump 29 used for driving the cleaning solution, the suction inlet of which is connected with a suction duct 35 that communicates with the aforementioned tank 4.

Each one of these ducts 19 connected to the containers 17 has a respective valve 20 interposed in it. Likewise, the air supply duct 23 and the water supply duct 25 have also respective valves 24 and 26 interposed in them. The drive duct 27 coming from the pump 29 has another valve 28 interposed in it, as well as, a flow regulating device 31. The opening and closing of said valves is actuated by actuation means and controlled automatically by the electrical control panel housed in said cabinet 11.

Said drain of the tray 6 forming the bottom of the upper compartment 2 communicates with the tank 4 through a deviation device 33, which is actuated by a fluid-dynamic actuator 34 that shifts the position of said deviator 33 such that the fluid coming from the drain pipe 36 is poured into the tank 4 or is deviated to an exit point 37 towards the outside the machine.

The needles 40 to be washed are of the hollow variety and have an inner longitudinal passage, a series of outlet ports (not shown) in their lower portion in communication with the inner passage and an inlet opening in their upper portion that is likewise in communication with the inner passage. In practice, when the needles 40 are inserted into the holes 16 of the support bases 15, said lower portion of each needle, where the outlet ports are located, is housed inside the respective container 17, whereas the upper portion of each needle, where the inlet opening is located, remains, as shown in Fig. 3, above the corresponding support base 15, i.e., outside the container 17 and inside the upper compartment 2.

During a cleaning operation, various groups of needles 40 to be cleaned, all of them identical in height, are inserted into the respective holes 16 of the support bases 15 associated with the the containers 17. Then, the inner cover 9 is lowered until it abuts against and rests on the upper end of all the needles 40, thus immobilizing them, and then the outer cover 8 is closed.

It must be mentioned that said inner cover 9 has hinge elements mounted on vertical guides 38 (Fig. 2), which have several anchoring points at different heights, so as to be able to adjust said inner cover 9 to needle 40 groups having different heights.

The method for cleaning needles for injecting fluids into meat products of the present invention, comprises firstly injecting, successively into each container 17 by means of the pump 29 and applying an alternating actuation to the valves 20, a cleaning solution, such as for instance a diluted caustic soda (NaOH) solution, coming from the tank 4. Thanks to the hermetical conditions of the containers 17, the caustic soda solution will penetrate through the outlet ports, pass through the inner passage and exit through the inlet opening of all the needles 40 arranged in each container 17, thus cleaning them.

The caustic soda solution coming out of the upper hole of the needles 40 lastly falls into the tray 6 that forms the bottom of the upper compartment 2, and is directed by the drain pipe 36 again towards the tank 4, from where it can be recycled once again towards the pump 29. Optionally, by shifting the position of the deviation device 33, the caustic soda solution coming from the drain pipe 36 can be ejected outside through the exit point 37.

This operation will be repeated, as the machine operator sees fit, one or more times for each one of the containers 17. Afterwards, each one of the remaining needle 40 containers will be treated accordingly in succession, opening the corresponding valve 20 and closing that of the other containers. The flow regulator 31 of the pump 29 shall be adequately adjusted, the valve 28 will be open and the other valves 24, 26 closed.

After having injected the caustic soda solution successively into all the containers 17 and having repeated the operation, when necessary, for one or more of them, the valve 28 of the pump 29 will be closed and the valve of the air supply duct 23 will be opened to successively inject into each one of the containers 17 pressurized air coming from a source of pressurized air supply, such as for example a compressor external to the machine. This is achieved by applying an alternating actuation to the valves 20.

The air injected into each container penetrates through the outlet ports, passes along the entire length of the inner passage and exits through the upper inlet opening of each needle 40, and then expands across all the upper compartment, passes through the drain pipe 36 and finally is deviated outwards by the deviator 33, which will be conveniently actuated so as to direct it towards the exit point 37.

Then, said valve 24 of the air supply duct 23 will be closed and the valve 26 of the pressurized water supply duct 25 will be opened, such that by applying an alternating actuation to the valves 20 the water will be injected successively into each container 17 and will penetrate accordingly through the outlet ports, pass along the entire length of the inner passage and exit through the upper inlet opening of each needle 40 in order to clean each one of them. This water, which acts as cleaning liquid, after exiting through the upper inlet opening of each needle, will fall into the tray 6 that forms the bottom of the upper compartment 2, pass through the drain pipe 36 and be deviated outwards by means of the deviator 33, to a spillway for example, through the exit point 37.

Finally, the valve 26 of the water supply duct 25 will be closed and the valve of the air supply duct 23 will be opened again to inject pressurized air coming from the source of pressurized air supply into each one of the containers 17.

The described electric and hydraulic circuits are supplemented with a return water sensor 42 located in the drain pipe 36, a safety-level sensor 44 located in the tank 4, a first electromagnetic safety device 45 for the inner cover 9, and a second electromagnetic safety device 46 for a tank cover 39, which closes the top of the tank 4.

A person skilled in the art may introduce changes and modifications in the described exemplary embodiments, without departing from the scope of the invention as defined in the accompanying claims.

## Claims

1. A method for cleaning needles for injecting fluids into meat products, said needles (40) comprising an inner longitudinal passage, a plurality of outlet ports in communication with said inner passage in its lower portion and an inlet opening in communication with the inner passage in its upper portion, **characterized in that** it comprises the step of inserting one or more of said needles (40) into holes (16) provided in a support base (15) such that said outlet ports of each needle (40) remain inside an airtight container (17) fastened to said support base (15) and said inlet opening of each needle (40) remaining inside an upper chamber (2), and the subsequent steps of:
a) feeding a pressurized cleaning solution into said container (17), said cleaning solution thereby entering through the outlet ports, passing through the inside of the inner passage and exiting through said upper inlet opening of each needle (40);
b) feeding a pressurized gas into said container (17), said gas thereby entering through the outlet ports, passing through the inside of the inner passage and exiting through said upper inlet opening of each needle (40);
c) feeding a washing liquid into said container (17), said washing liquid thereby entering through the outlet ports, passing through the inside of the inner passage and exiting through said upper inlet opening of each needle (40); and
d) again feeding pressurized gas into said container (17), said gas thereby entering through the outlet ports, passing through the inside of the inner passage and exiting through said upper inlet opening of each needle (40).

2. The method according to claim 1, **characterized in that** said cleaning solution is caustic soda NaOH.

3. The method according to claim 1, **characterized in that** said gas is air.

4. The method according to claim 1, **characterized in that** said washing liquid is water.

5. The method according to claim 1, **characterized in that** it comprises using several of said containers (17) and carrying out at least step a) sequentially for every container (17) one after the other.

6. The method according to claim 5, **characterized in that** step a) is carried out one or more times for each container (17).

7. The method according to claim 1 or 2, **characterized in that** it comprises collecting the cleaning solution that comes out through the inlet openings of the needles (40), in a tank of cleaning solution (4) for recovery and/or recirculation thereof.

8. A machine for cleaning needles for injecting fluids into meat products, comprising:
at least one airtight container (17) that is closed at the top by a support base (15), said support base (15) comprising a plurality of holes (16) for the insertion of at least one group of needles (40) into a position in which an upper portion of the needles (40), where an inlet opening in communication with an inner
longitudinal passage thereof is located, remains outside said container (17) and a lower portion of the needles (40), where outlet ports in communication with said inner longitudinal passage thereof are located, is inside the container (17);
a pressurized air supply duct (23) which communicates with the container (17), said pressurized air supply duct (23) being connectable to a source of pressurized air supply, thereby pressurized air supplied to the container (17) enters through said outlet ports, passes through the inside of said inner passage and exits through said upper inlet opening of each needle (40); and
means for opening and closing a fluid passage (24) interposed in the pressurized air supply duct (23),
**characterized by** further comprising:
a tank (4) containing a cleaning solution, drive means (29) for driving said cleaning solution, an intake duct (35) communicating said tank (4) with said drive means (29) and a drive duct (27) communicating the drive means with said container (17), thereby the cleaning solution supplied to the container (17) enters through said outlet ports, passes through the inside of said inner passage and exits through said upper inlet opening of each needle (40);
a washing liquid supply duct (25) which communicates with the container (17), said washing liquid supply duct (25) being connectable to a source of washing liquid supply, thereby washing liquid supplied to the container (17) enters through said outlet ports, passes through the inside of said inner passage and exits through said upper inlet opening of each needle (40);
means for opening and closing a fluid passage (26, 28) interposed in the washing liquid supply duct (25), and said drive duct (27); and
a tray (6) arranged so as to collect fluids coming out of the inlet opening located in the upper portion of each needle (40).

9. The machine for cleaning needles according to claim 8, **characterized in that** the drive duct (27), the pressurized air supply duct (23), and the washing liquid supply duct (25) are in communication with a collector (21), which in turn is in communication with the container (17) through a duct (19) provided with means for opening and closing a fluid passage (20) interposed therein.

10. The machine for cleaning needles according to claim 9, **characterized in that** it comprises a plurality of said containers (17) and **in that** said collector (21) is in communication with each one of the containers (17) via the respective ducts (19) provided with said means for opening and closing a fluid passage (20) interposed therein.

11. The machine for cleaning needles according to claim 8, 9 or 10, **characterized in that** each one of said holes (16) in the support base (15) is provided with a sealing gasket.

12. The machine for cleaning needles according to claim 11, **characterized in that** it comprises a body having an upper compartment (2), a lower compartment (3) and a side compartment, wherein said side compartment includes said tank (4), wherein said upper (2) and lower (3) compartments are separated by said tray (6), wherein said tray (6) constitutes a bottom of the upper compartment (2), is connected to a drain pipe (36) and supports said support bases (15) in a position in which the upper portion of the needles (40), where the inlet opening is located, is inside the upper compartment (2) and said container (17) is in the lower compartment (3), and wherein said drive means (29), said collector (21), said drive duct (27), said pressurized air supply duct (23), and said washing liquid supply duct (25) are housed in the lower compartment (3).

13. The machine for cleaning needles according to claim 12, **characterized in that** the upper compartment (2) is provided with an outer cover (8) for closing the same, and an inner cover (9) which can be adjusted in height and which abuts against an upper end of the needles (40) supported on the support bases (15).

14. The machine for cleaning needles according to claim 12, **characterized in that** said drain pipe (36) ends in a deviation device (33) actuated by a fluid-dynamic actuator (34) capable of moving said deviator (33) to selectively direct the fluid coming from the drain pipe (36) towards the tank (4) or towards an exit point (37) that drains out of the machine.

15. The machine for cleaning needles according to claim12, **characterized in that** a safety-level sensor device (44) is provided in the cleaning solution tank (4), and/or a sensor device (42) for detecting the return fluid is provided in the drain pipe (36), and/or the inner cover (9) is provided with an electromagnetic safety device (45) and the tank (4) has a tank cover (39) provided with an electromagnetic safety device (46).

## Patentansprüche

1. Verfahren zur Reinigung von Nadeln zum Einspritzen von Fluiden in Fleischprodukte, wobei die genannten Nadeln (40) einen inneren Längsdurchgang, eine Vielzahl von Austrittsöffnungen in Verbindung mit dem genannten inneren Durchgang in dessen unteren Teil und einer Eintrittsöffnung in Verbindung mit dem inneren Durchgang in dessen oberen Teil umfassen, **dadurch gekennzeichnet, dass** es den Schritt des Einführens einer oder mehreren der genannten Nadeln (40) in Löcher (16), welche in einer Stützbasis (15) bereitgestellt werden, umfasst, so dass die genannten Austrittsöffnungen jeder Nadel (40) innerhalb eines luftdichten Behälters (17) bleiben, welcher an der genannten Stützbasis (15) befestigt ist, und wobei die genannte Eintrittsöffnung jeder Nadel (40) innerhalb einer oberen Kammer (2) bleibt, und die folgenden Schritte umfasst:
a) das Einspeisen einer druckbeaufschlagten Reinigungslösung in den genannten Behälter (17), wobei die genannte Reinigungslösung dadurch durch die Austrittsöffnungen dringt, durch das Innere des inneren Durchgangs durchgeht und durch die genannte obere Eintrittsöffnung jeder Nadel (40) austritt;
b) das Einspeisen eines druckbeaufschlagten Gases in den genannten Behälter (17), wobei das genannte Gas dadurch durch die Austrittsöffnungen dringt, durch das Innere des inneren Durchgangs durchgeht und durch die genannte obere Eintrittsöffnung jeder Nadel (40) austritt;
c) das Einspeisen einer Waschflüssigkeit in den genannten Behälter (17), wobei die genannte Waschflüssigkeit dadurch durch die Austrittsöffnungen dringt, durch das Innere des inneren Durchgangs durchgeht und durch die genannte obere Eintrittsöffnung jeder Nadel (40) austritt; und
d) das erneute Einspeisen eines druckbeaufschlagten Gases in den genannten Behälter (17), wobei das genannte Gas dadurch durch die Austrittsöffnungen dringt, durch das Innere des inneren Durchgangs durchgeht und durch die genannte obere Eintrittsöffnung jeder Nadel (40) austritt.

2. Verfahren nach Anspruch 1, **dadurch gekennzeichnet, dass** die genannte Reinigungslösung Natronlauge NaOH ist.

3. Verfahren nach Anspruch 1, **dadurch gekennzeichnet, dass** das genannte Gas Luft ist.

4. Verfahren nach Anspruch 1, **dadurch gekennzeichnet, dass** die genannte Waschflüssigkeit Wasser ist.

5. Verfahren nach Anspruch 1, **dadurch gekennzeichnet, dass** es die Verwendung mehrerer der genannten Behälter (17) und die Durchführung von mindestens Schritt a) sequenziell für jeden Behälter (17) nacheinander umfasst.

6. Verfahren nach Anspruch 5, **dadurch gekennzeichnet, dass** Schritt a) einmal oder mehrmals für jeden Behälter (17) durchgeführt wird.

7. Verfahren nach Anspruch 1 oder 2, **dadurch gekennzeichnet, dass** es das Sammeln der Reinigungslösung, welche durch die Eintrittsöffnungen der Nadeln (40) rauskommt, in einem Gefäß für Reinigungslösung (4) für die Zurückgewinnung und/oder die Rückführung derselben, umfasst.

8. Maschine zur Reinigung von Nadeln zum Einspritzen von Fluiden in Fleischprodukte, umfassend:
mindestens einen luftdichten Behälter (17), welcher am oberen Teil von einer Stützbasis (15) geschlossen ist, wobei die genannte Stützbasis (15) eine Vielzahl von Löchern (16) für die Einführung mindestens einer Gruppe von Nadeln (40) in eine Stellung, in welcher ein oberer Teil der Nadeln (40), wo sich eine Eintrittsöffnung in Verbindung mit einem inneren Längsdurchgang derselben befindet, außerhalb des genannten Behälters (17) bleibt und ein unterer Teil der Nadeln (40), wo sich Austrittsöffnungen in Verbindung mit dem genannten inneren Längsdurchgang derselben befinden, innerhalb des Behälters (17) ist;
eine Druckluftzuführungsleitung (23), welche in Verbindung mit dem Behälter (17) steht, wobei die genannte Druckluftzuführungsleitung (23) an einer Quelle von Druckluftzuführung angeschlossen werden kann, dadurch die zum Behälter (17) zugeführten Druckluft durch die genannten Austrittsöffnungen dringt, durch das Innere des genannten inneren Durchgangs durchgeht und durch die genannte obere Eintrittsöffnung jeder Nadel (40) austritt; und
Mittel zum Öffnen und Schließen eines Fluiddurchgangs (24), welche in der Druckluftzuführungsleitung (23) eingefügt sind, umfasst,
**dadurch gekennzeichnet, dass** sie zusätzlich Folgendes umfasst:
ein Gefäß (4), welches eine Reinigungslösung enthält, Antriebsmittel (29) zum Antreiben der genannten Reinigungslösung, eine Einlassleitung (35), welche das genannte Gefäß (4) mit den genannten Antriebsmitteln (29) verbindet, und eine Antriebsleitung (27), welche die Antriebsmittel mit dem genannten Behälter (17) verbindet, wodurch die zum Behälter (17) zugeführte Reinigungslösung durch die genannten Austrittsöffnungen dringt, durch das Innere des genannten inneren Durchgangs durchgeht und durch die genannte obere Eintrittsöffnung jeder Nadel (40) austritt;
eine Waschflüssigkeitszuführungsleitung (25), welche in Verbindung mit dem Behälter (17) steht, wobei die genannte Waschflüssigkeitszuführungsleitung (25) an einer Quelle von Waschflüssigkeitszuführung angeschlossen werden kann, wodurch die zum Behälter (17) zugeführte Waschflüssigkeit durch die genannten Austrittsöffnungen dringt, durch das Innere des genannten inneren Durchgangs durchgeht und durch die genannte obere Eintrittsöffnung jeder Nadel (40) austritt;
Mittel zum Öffnen und Schließen eines Fluiddurchgangs (26, 28), welche in der Waschflüssigkeitszuführungsleitung (25) und der genannten Antriebsleitung (27) eingefügt sind; und
eine Schale (6), welche derart angeordnet ist, dass sie die Fluide sammelt, welche aus der Eintrittsöffnung austreten, welche sich im oberen Teil jeder Nadel (40) befindet.

9. Maschine zur Reinigung von Nadeln nach Anspruch 8, **dadurch gekennzeichnet, dass** die Antriebsleitung (27), die Druckluftzuführungsleitung (23) und die Waschflüssigkeitszuführungsleitung (25) in Verbindung mit einem Sammler (21) stehen, welcher wiederum in Verbindung mit dem Behälter (17) über eine Leitung (19) steht, welche mit darin eingefügten Mitteln zum Öffnen und Schließen eines Fluiddurchgangs (20) versehen ist.

10. Maschine zur Reinigung von Nadeln nach Anspruch 9, **dadurch gekennzeichnet, dass** sie eine Vielzahl von den genannten Behältern (17) umfasst und dass der genannte Sammler (21) in Verbindung mit jedem der Behälter (17) über die jeweiligen Leitungen (19) steht, welche mit den genannten, darin eingefügten Mitteln zum Öffnen und Schließen eines Fluiddurchgangs (20) versehen sind.

11. Maschine zur Reinigung von Nadeln nach Anspruch 8, 9 oder 10, **dadurch gekennzeichnet, dass** jedes der genannten Löcher (16) in der Stützbasis (15) mit einer Dichtung versehen ist.

12. Maschine zur Reinigung von Nadeln nach Anspruch 11, **dadurch gekennzeichnet, dass** sie einen Körper mit einem oberen Raum (2), einem unteren Raum (3) und einem seitlichen Raum umfasst, wobei der genannte seitliche Raum das genannte Gefäß (4) beinhaltet, wobei der genannte obere Raum (2) und der genannte untere Raum (3) durch die genannte Schale (6) getrennt sind, wobei die genannte Schale (6) einen unteren Teil des oberen Raums (2) bildet, an einem Abflussrohr (36) angeschlossen ist und die genannten Stützbasen (15) in einer Stellung stützt, in welcher der obere Teil der Nadeln (40), wo sich die Eintrittsöffnung befindet, innerhalb des oberen Raums (2) ist und der genannte Behälter (17) im unteren Raum (3) ist, und wobei die genannten Antriebsmittel (29), der genannte Sammler (21), die genannte Antriebsleitung (27), die genannte Druckluftzuführungsleitung (23) und die genannte Waschflüssigkeitszuführungsleitung (25) im unteren Raum (3) aufgenommen sind.

13. Maschine zur Reinigung von Nadeln nach Anspruch 12, **dadurch gekennzeichnet, dass** der obere Raum (2) mit einem äußeren Deckel (8) zum Schließen desselben, und einem inneren Deckel (9), welcher höhenverstellbar ist und welcher an einem oberen Ende der auf den Stützbasen (15) gestützten Nadeln (40) anliegt, versehen ist.

14. Maschine zur Reinigung von Nadeln nach Anspruch 12, **dadurch gekennzeichnet, dass** das genannte Abflussrohr (36) in einer Umlenkvorrichtung (33) endet, welche von einem fluiddynamischen Aktuator (34) betätigt wird, welcher in der Lage ist die genannte Umlenkvorrichtung (33) zu bewegen, um das aus dem Abflussrohr (36) kommende Fluid zum Gefäß (4) hin oder zu einem Ausgangspunkt (37) hin, welcher aus der Maschine ausläuft, selektiv zu richten.

15. Maschine zur Reinigung von Nadeln nach Anspruch 12, **dadurch gekennzeichnet, dass** eine Sicherheitsstufe-Sensorvorrichtung (44) im Reinigungslösungsgefäß (4) bereitgestellt wird, und/oder eine Sensorvorrichtung (42) zum Erfassen des Rücklauffluids im Abflussrohr (36) bereitgestellt wird, und/oder der innere Deckel (9) mit einer elektromagnetischen Sicherheitsvorrichtung (45) bereitgestellt wird und das Gefäß (4) einen Gefäßdeckel (39) aufweist, welcher mit einer elektromagnetischen Sicherheitsvorrichtung (46) versehen ist.

## Revendications

1. Une méthode pour nettoyer des aiguilles pour injecter des fluides dans des morceaux de viande, ces aiguilles (40) comportant un passage longitudinal intérieur, une pluralité d'orifices de sortie en communication avec ce passage intérieur dans sa portion inférieure et une ouverture d'entrée en communication avec le passage intérieur dans sa portion supérieure, **caractérisée en ce qu'**elle comprend l'étape d'insertion d'une ou plusieurs de ces aiguilles (40) dans les orifices (16) prévus sur une base de support (15) de sorte que ces orifices de sortie de chaque aiguille (40) restent à l'intérieur d'un récipient hermétique (17) fixé sur cette base de support (15) et cette ouverture d'entrée de chaque aiguille (40) restant à l'intérieur d'une chambre supérieure (2), et les étapes suivantes:
a) l'alimentation d'une solution de nettoyage sous pression dans ce récipient (17), cette solution de nettoyage entrant ainsi à travers les orifices de sortie, passant à travers l'intérieur de ce passage intérieur et sortant à travers cette ouverture d'entrée supérieure de chaque aiguille (40) ;
b) l'alimentation de gaz sous pression dans ce récipient (17), ce gaz entrant ainsi à travers les orifices de sortie, passant à travers l'intérieur du passage intérieur et sortant à travers cette ouverture d'entrée supérieure de chaque aiguille (40) ;
c) l'alimentation d'un liquide de lavage dans ce récipient (17), ce liquide de lavage entrant ainsi à travers les orifices de sortie, passant à travers l'intérieur du passage intérieur et sortant à travers cette ouverture d'entrée supérieure de chaque aiguille (40) ; et
d) à nouveau l'alimentation de gaz sous pression dans ce récipient (17), ce gaz entrant ainsi à travers les orifices de sortie, passant à travers l'intérieur du passage intérieur et sortant à travers cette ouverture d'entrée de chaque aiguille (40).

2. La méthode conformément à la revendication 1, **caractérisée en ce que** cette solution de nettoyage est de la soude caustique NaOH.

3. La méthode conformément à la revendication 1, **caractérisée en ce que** ce gaz est de l'air.

4. La méthode conformément à la revendication 1, **caractérisée en ce que** ce liquide de lavage est de l'eau.

5. La méthode conformément à la revendication 1, **caractérisée en ce qu'**elle comporte l'utilisation de plusieurs de ces récipients (17) et mettant en oeuvre au moins l'étape a) séquentiellement pour chaque récipient (17) l'un après l'autre.

6. La méthode conformément à la revendication 5, **caractérisée en ce que** l'étape a) est mise en oeuvre une ou plusieurs fois pour chaque récipient (17).

7. La méthode conformément à la revendication 1 ou 2, **caractérisée en ce qu'**elle comporte collecter la solution de nettoyage sortant à travers les ouvertures d'entrée des aiguilles (40) dans un réservoir de solution de nettoyage (4) pour la récupérer et/ou la recycler.

8. Une machine pour nettoyer des aiguilles pour injecter des fluides dans des morceaux de viande comportant :
au moins un récipient hermétique (17) qui est fermé à la partie supérieure par une base de support (15), cette base de support (15) comportant une pluralité d'orifices (16) pour l'insertion d'au moins un groupe d'aiguilles (40) dans une position dans laquelle une portion supérieure des aiguilles (40), où une ouverture d'entrée en communication avec un passage longitudinal intérieur de celle -ci est située,
reste à l'extérieur de ce récipient (17) et une portion inférieure des aiguilles (40), où des orifices de sortie en communication avec ce passage longitudinal intérieur de celle-ci est situé, est à l'intérieur du récipient (17) ;
un conduit (23) d'alimentation d'air sous pression qui communique avec le récipient (17), ce conduit (23) d'air sous pression pouvant être branché à une source d'alimentation d'air sous pression, l'air sous pression alimenté au récipient (17) entre ainsi à travers ces orifices de sortie, passe à travers l'intérieur de ce passage intérieur et sort à travers cette ouverture d'entrée supérieure de chaque aiguille (40) ; et
des moyens pour ouvrir et fermer un passage de fluide (24) interposé dans le conduit d'alimentation d'air sous pression (23),
**caractérisée en ce qu'**elle comporte en plus :
un réservoir (4) contenant une solution de nettoyage, des moyens d'entraînement (29) pour entraîner cette solution de nettoyage, un conduit d'amenée (35) communiquant ce réservoir (4) avec ces moyens d'entraînement (29) et un conduit d'entraînement (27) communiquant les moyens d'entraînement avec ce récipient (17), la solution de nettoyage alimentée au récipient (17) entre ainsi à travers ces orifices de sortie, passe à travers l'intérieur de ce passage intérieur et sort à travers cette ouverture d'entrée supérieure de chaque aiguille (40).
un conduit (25) d'alimentation de liquide de lavage qui communique avec le récipient (17), ce conduit (25) d'alimentation de liquide de lavage pouvant être branché à une source d'alimentation de liquide de lavage, le liquide de lavage alimenté au récipient (17) entre ainsi à travers ces orifices de sortie, passe à travers l'intérieur de ce passage intérieur et sort à travers cette ouverture d'entrée supérieure de chaque aiguille (40) ;
des moyens pour ouvrir et fermer un passage de fluide (26,28) interposés dans le conduit (25) d'alimentation de liquide de lavage, et ce conduit d'entraînement (27) ; et
un bac (6) aménagé de sorte à collecter les fluides provenant de l'ouverture d'entrée située dans la portion supérieure de chaque aiguille (40).

9. La machine pour nettoyer des aiguilles conformément à la revendication 8, **caractérisée en ce que** le conduit (27) d'entraînement, le conduit (23) d'alimentation d'air sous pression et le conduit (25) d'alimentation de liquide de lavage sont en communication avec un collecteur (21) qui, à son tour, est en communication avec le récipient (17) à travers un conduit (19) pourvu de moyens pour ouvrir et fermer un passage de fluide (20) qui y sont interposés.

10. La machine pour nettoyer des aiguilles conformément à la revendication 9, **caractérisée en ce qu'**elle comporte une pluralité de ces récipients (17) et **en ce que** ce collecteur (21) est en communication avec chacun des récipients (17) par le biais des conduits (19) respectifs pourvus de ces moyens pour ouvrir et fermer un passage de fluide (20) qui y sont interposés.

11. La machine pour nettoyer des aiguilles conformément à la revendication 8, 9 ou 10 **caractérisée en ce que** chacun de ces orifices (16) dans la base de support (15) est pourvu d'une garniture étanche.

12. La machine pour nettoyer des aiguilles conformément à la revendication 11, **caractérisée en ce qu'**elle comporte un corps ayant un compartiment supérieur (2), un compartiment inférieur (3) et un compartiment latéral , où ce compartiment latéral comprend ce réservoir (4), où ces compartiments supérieur (2) et inférieur (3) sont séparés par ce bac (6), où ce bac (6) constitue un fond du compartiment supérieur (2), est branché à un tuyau de vidange (36) et supporte ces bases de support (15) dans une position dans laquelle la portion supérieure des aiguilles (40), où se trouve située l'ouverture d'entrée est à l'intérieur du compartiment supérieur (2) et ce récipient (17) est dans le compartiment inférieur (3) et où ces moyens d'entraînement (29), ce collecteur (21), ce conduit d'entraînement (27), ce conduit (23) d'alimentation d'air sous pression et ce conduit (25) d'alimentation de liquide de lavage sont logés dans le compartiment inférieur (3).

13. La machine pour nettoyer des aiguilles conformément à la revendication 12, **caractérisée en ce que** le compartiment supérieur (2) est pourvu d'un couvercle extérieur (8) pour le fermer et un couvercle intérieur (9) pouvant être ajusté en hauteur et qui est contigu à une extrémité supérieure des aiguilles (40) supportées sur les bases de support (15).

14. La machine pour nettoyer des aiguilles conformément à la revendication 12, **caractérisée en ce que** ce tuyau de vidange (36) finit en un dispositif de déviation (33) activé par un actionneur hydrodynamique (34) capable de déplacer ce déviateur (33) pour diriger de manière sélective le fluide provenant du tuyau de vidange (36) vers le réservoir (4) ou vers un point de sortie (37) qui vidange la machine.

15. La machine pour nettoyer des aiguilles conformément à la revendication 12, **caractérisée en ce qu'**un dispositif capteur de niveau sûr (44) est prévu dans le réservoir de solution de nettoyage (4) et/ou un dispositif capteur (42) pour détecter le fluide de retour est prévu dans le conduit de vidange (36), et/ou le couvercle intérieur (9) est pourvu d'un dispositif de sécurité électromagnétique (45) et le réservoir (4) possède un couvercle de réservoir (39) pourvu d'un dispositif de sécurité électromagnétique (46).
